# EUROPEAN PATENT SPECIFICATION

(11) **EP 4 394 184 B1**
(45) Date of publication and mention of the grant of the patent: **04.11.2026**
(21) Application number: 22383289.0
(22) Date of filing: 26.12.2022
(51) Int. Cl.: F04D 15/00, F16K 15/03, F16K 31/08

(54) **HYDRAULIC SYSTEM FOR A HOUSEHOLD APPLIANCE**
HYDRAULIKSYSTEM FÜR EIN HAUSHALTSGERÄT
SYSTÈME HYDRAULIQUE POUR UN APPAREIL MÉNAGER

(43) Date of publication of application: 03.07.2024
(73) Proprietor: Copreci, S.Coop., 20550 Aretxabaleta (ES)
(72) Inventor: ORUE ORUE, Rodrigo, 01138 ZIGOITIA (ES)
(74) Representative: Galbaian S.Coop.

(56) References cited:
- EP-B1- 2 580 505
- DE-A1- 102008 029 910
- DE-A1- 102015 224 657
- KR-A- 20060 063 392
- US-A1- 2017 188 783
- US-A1- 2022 117 460

## Description

### TECHNICAL FIELD

The present invention relates to a hydraulic system for a household appliance, and to a control method for controlling a hydraulic system of a household appliance.

### PRIOR ART

Hydraulic systems comprising a pump, an outlet conduit connected to the outlet of said pump, and a check valve, are known. A check valve is a type of valve which allows flow circulation in one direction of passage and prevents flow circulation in the opposite direction.

For example, check valves comprising a flap pivoting between an open position in which it allows flow circulation in a direction of passage, and a closed position in which the flap prevents flow circulation in the direction opposite the direction of passage, are known. On one hand, conventional check valves in which the flap allows flow passage in a direction of passage with practically zero resistance are known. On the other hand, magnetic check valves which, in order to allow flow passage in a direction of passage, must overcome a magnetic force which retains the flap in the closed position, are known. EP 2 580 505 B1 relates to a magnetic check valve of this type.

### DISCLOSURE OF THE INVENTION

The object of the invention is to provide a hydraulic system for a household appliance and a control method for controlling a hydraulic system of a household appliance, as defined in the claims.

A first aspect of the invention relates to a hydraulic system for a household appliance, preferably for a washing machine or a dish washer.

The hydraulic system comprises a pump, an outlet conduit connected to the outlet of said pump, and a check valve.

The check valve comprises a support surface and a flap pivotably coupled to said support surface, the flap and the support surface comprising ferromagnetic properties. At least said flap or said support surface comprises a permanent magnet, a magnetic check valve thereby being obtained.

The flap is configured to pivot between an open position in which it allows the circulation of a fluid driven by the pump through said outlet conduit, and a closed position in which the flap is supported on the support surface such that it prevents the circulation of said fluid through said outlet conduit.

The hydraulic system also comprises a control unit.

The pump comprises a BLDC-, BLAC-, or PMSM-type motor. The control unit is configured to control the speed of the motor in a closed loop.

Furthermore, the control unit is configured to determine whether the flap of the check valve is in the open position or in the closed position based on an estimated torque of the motor, said torque of the motor being estimated from the current consumption of the motor and/or the voltage in the terminals of the motor.

The control unit is also configured to operate the motor at an opening speed to open the flap of the check valve, driving the fluid such that it generates a pressure on the flap which overcomes the magnetic force between said flap and the support surface, and to operate the motor at a circulating speed less than the opening speed if it detects that the flap of the check valve has opened.

The control unit is further configured to determine that the flap has opened if it detects an increase in the estimated torque of the motor.

As explained above, a magnetic check valve allows obtaining a hydraulic system which, in addition to ensuring that the fluid can only circulate in the direction of passage, offers a closing force that only allows the flap to be opened once the magnetic force which retains the flap in the closed position is overcome. In that sense, if in a conventional check valve the flap transitions from the closed position to the open position exerting a minimum pressure, in the case of the magnetic check valve, the pressure required is higher, and therefore it is important to ensure that the flap has transitioned to the open position to achieve a proper operation of the hydraulic system.

The hydraulic system of the invention allows detecting the position in which the flap is arranged without having to add additional sensors such as, for example, pressure sensors, flow rate sensors, etc., which allow the control unit to determine the position in which the flap of the check valve is arranged.

Since the control unit is configured to control the motor of the pump in a closed speed loop, said control unit is configured to establish a setpoint speed and to keep the rotor rotating at said setpoint speed regardless of the load variation in the motor shaft. By keeping the rotational speed of the motor of the pump constant, an increase in the flow rate to be driven by the pump requires an increase in the torque of the motor. When the flap of the check valve is in closed position, the flow rate driven by the pump is zero. However, when the flap transitions from the closed position to the open position, the flow rate driven by the pump increases and therefore the torque of the motor also increases. As mentioned above, the control unit is configured to determine whether the flap of the check valve is in the open position or in the closed position based on an estimated torque of the motor. The control unit is configured to estimate the torque of the motor from the current consumption of the motor and/or the voltage in the terminals of the motor. The way for estimating the torque of the motor will depend on the control method used to control the motor. In that sense, to estimate the torque of the motor, some of the parameters calculated by the control unit to control and power the motor are preferably used, said parameters being calculated from the measurement of the current consumption of the motor or the voltage in the terminals of the motor. Parameters inherent to the motor control method are thereby used to enable determining the transition of the flap from the closed position to the open position.

When choosing the pump of the hydraulic system and establishing the opening speed at which said pump must work to generate a pressure on the flap which enables the opening of the flap, the magnetic force of the check valve to be overcome is taken into account. In normal operating conditions, upon operating the pump at said opening speed, the flap will transition from the closed position to the open position. However, in abnormal operating conditions, for example due to excessive friction, a blocked hinge, etc., working at said opening speed may not be sufficient to transition the flap from the closed position to the open position.

The possibility of being able to detect the position in which the flap of the check valve is arranged means that the motor of the pump does not have to be oversized, since the alternative to being able to detect whether the flap pivots from the closed position to the open position would be to provide an oversized pump which allows exerting a pressure greater than that necessary to overcome the magnetic force of the check valve in order to ensure that the flap will pivot from the open position, even when there is an additional impediment. However, this solution, besides being more expensive due to the use of an oversized pump, does not allow knowing the position of the flap.

A second aspect of the invention relates to a control method for controlling a hydraulic system of a household appliance, preferably a control method for controlling a hydraulic system of a washing machine or a dish washer.

The hydraulic system to be controlled comprises a pump, an outlet conduit connected to the outlet of said pump, and a check valve. The check valve comprises a support surface and a flap pivotably coupled to said support surface, the flap and the support surface comprising ferromagnetic properties, at least said flap or said support surface comprising a permanent magnet. The flap is configured to pivot between an open position in which it allows the circulation of a fluid driven by the pump through said outlet conduit, and a closed position in which the flap is supported on the support surface such that it prevents the circulation of said fluid through said outlet conduit. The pump comprises a BLDC-, BLAC-, or PMSM-type motor.

The control method controls the speed of the motor in a closed loop. Furthermore, the control method determines whether the flap of the check valve is in the open position or in the closed position based on estimating the torque of the motor from the current consumption of the motor and/or the voltage in the terminals of the motor.

The control method comprises an opening step in which the motor is operated at an opening speed to open the flap of the check valve, driving the fluid such that it generates a pressure on the flap which overcomes the magnetic force between said flap and the support surface, and, if it is detected that the flap has opened, a circulating step in which the motor is operated at a circulating speed less than the opening speed, with the flap being determined as having opened in the opening step if an increase in the estimated torque of the motor is detected.

These and other advantages and features of the invention will become apparent in view of the figures and detailed description of the invention.

### DESCRIPTION OF THE DRAWINGS

Figure 1 shows a first partial view of the hydraulic system according to a first embodiment of the invention, in which the flap is arranged in an open position.
Figure 2 shows a second partial view of the hydraulic system of Figure 1, in which the flap is arranged in a closed position.
Figure 3 shows a perspective view of the hydraulic system according to a second embodiment of the invention, in which the flap is arranged in an open position.
Figure 4 shows a first section view of the hydraulic system of Figure 3, in which the flap is arranged in an open position.
Figure 5 shows a second section view of the hydraulic system of Figure 3, in which the flap is arranged in a closed position.
Figure 6 shows a third section view of the hydraulic system of Figure 3.
Figure 7 shows a block diagram of a way to execute the vectorial control method of a BLDC, BLDA, or PMSM motor.
Figure 8 shows, by way of example, a graph linking the effective current of the motor and the flow rate of the pump in steady state for different motor speeds.
Figure 9 shows a block diagram of a preferred embodiment of the control method of the invention.
Figure 10 shows the evolution over time of the effective current value of the motor of the pump in a hydraulic system controlled according to the control method of Figure 9.

### DETAILED DISCLOSURE OF THE INVENTION

A first aspect of the invention relates to a hydraulic system 1 for a household appliance, particularly for a washing machine or a dish washer.

The hydraulic system 1 comprises a pump 2, an outlet conduit 3 connected to the outlet of said pump 2, and a check valve 4.

The check valve 4 comprises a support surface 30 and a flap 40 pivotably coupled to said support surface 30. Both the flap 40 and the support surface 30 comprise ferromagnetic properties, at least said flap 40 or said support surface 30 comprising a permanent magnet. Preferably, both the flap 40 and the support surface 30 comprise a permanent magnet.

The flap 40 is configured to pivot between an open position in which it allows the circulation of a fluid driven by the pump 2 through said outlet conduit 3, and a closed position in which the flap 40 is supported on the support surface 30 such that it prevents the circulation of said fluid through said outlet conduit 3. In the context of the invention, the flap 40 shall be deemed open when it is arranged in the open position and therefore allows the passage of the fluid driven by the pump 2, where the flap 40 can adopt different degrees of inclination with respect to the support surface 30 when it is arranged in said open position. Furthermore, in the context of the invention, the flap 40 shall be deemed closed when it is arranged in the closed position.

The hydraulic system also comprises a control unit (not shown in the figures).

The pump 2 comprises a motor 20, said motor 20 a being BLDC motor, a BLAC motor, or a PMSM motor.

The control unit is configured to control the speed of the motor 20 in a closed loop, this type of control of the BLDC, BLAC, and PMSM motors being extremely well known to one skilled in the art, and different control methods are known to achieve same. Preferably, the hydraulic system comprises a PWM inverter configured to feed the motor 20, the control unit being configured to control said inverter. Based on the desired rotational speed of the motor 20, i.e., the setpoint speed, the desired alternating current frequency is established at the outlet of the inverter, since the rotational speed in motors of this type is proportional to the frequency of the voltage fed thereto.

The control unit is configured to estimate the torque of the motor 20 from the current consumption of the motor 20 (either the current measured in the terminals of the motor 20 or the current measured in the return of the DC bus feeding the inverter which powers the motor 20) and/or from the voltage measured in the terminals of the motor 20, and to determine whether the flap 40 of the check valve 4 is in the open position or in the closed position based on said estimated torque of the motor 20.

In the context of the invention, estimated torque of the motor refers to a direct or indirect estimate of said torque, i.e., the control unit can monitor a parameter which reflects the torque of the motor to enable determining the position in which the flap 40 is arranged without having to directly calculate the torque of the motor. Preferably, the torque of the motor is estimated by means of the effective current of the motor.

For controlling the speed of the motor 20 in a closed loop, the control unit is configured to establish a setpoint speed and to keep the rotor rotating at said setpoint speed regardless of the load variation in the motor shaft. In that sense, by keeping the rotational speed constant, an increase in the flow rate driven by the pump 2 requires an increase in the torque of the motor 20. When the flap 40 of the check valve 4 is in the closed position, the flow rate driven by the pump is zero. However, when the flap 40 transitions to the open position, the flow rate driven by the pump 2 will increase, and therefore the torque of the motor 20 will also increase. Based on the control method used, said increase in torque can be estimated by different ways.

Preferably, the control unit is configured to operate the motor 20 at an opening speed f₄ to open the flap 40 of the check valve 4, i.e., so that the flap 40 pivots from the closed position to the open position, driving the fluid such that it generates a pressure on the flap 40 which generates a force that overcomes the magnetic force between said flap 40 and the support surface 30. Furthermore, the control unit is configured to operate the motor 20 at a circulating speed f₁ less than the opening speed f₄ if it detects that the flap 40 of the check valve 4 has opened. The control unit is configured to determine that the flap 40 has opened if it detects an increase in the estimated torque of the motor 20.

Preferably, if the opening of the flap 40 is not detected, i.e., an increase in the estimated torque of the motor 20 is not detected after operating at the opening speed for a predetermined time f₄, the control unit is configured to operate the motor 20 at a maximum speed greater than the opening speed f₄ for a predetermined time and to operate the motor 20 at the circulating speed f₁ if it detects that the flap 40 of the check valve 4 has opened with the motor 20 operating at the maximum speed.

Preferably, the control unit is configured to activate an alarm in the case of detecting a failed opening of the flap 40 of the check valve 4.

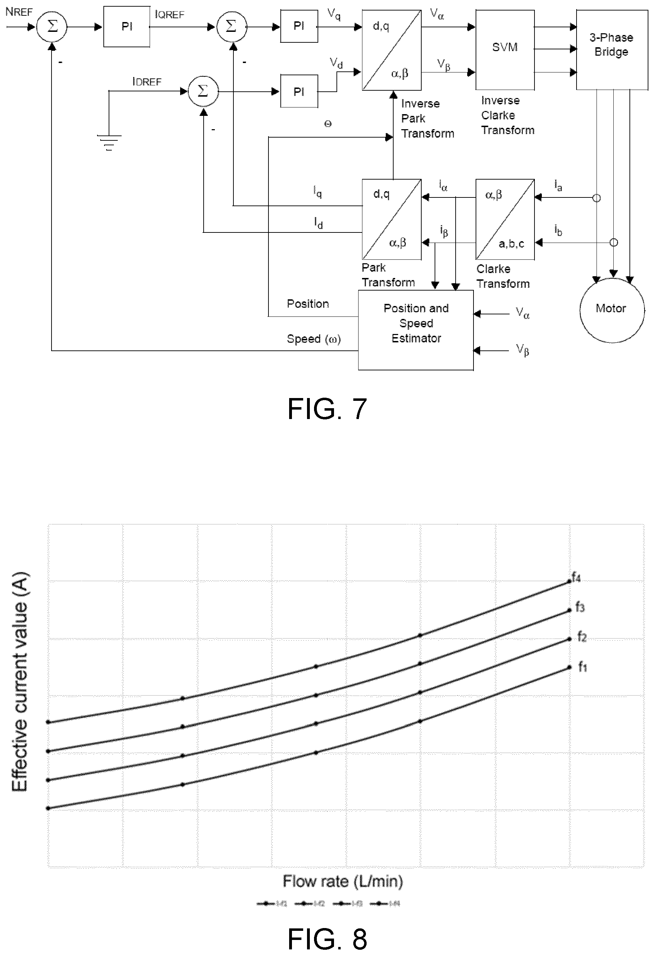

Preferably, the control unit is configured to control the motor 20 following the vectorial control method, also known as FOC ("Field Oriented Control"). Figure 7 shows by way of non-limiting example a control diagram according to the vectorial control method. The vectorial control method is based on the transformation of the three-phase stationary system consisting of currents measured in the terminals of the motor 20, also referred to as stator currents, into a two-phase rotary system in which currents I_{d} and I_{q} are defined. Currents Iq and I_{d} are therefore obtained with the vectorial control method based on the currents measured in the terminals of the motor 20, after applying the Clarke and Park transforms. The axis "q" is the axis of the torque of the motor 20 and the magnetic field of the stator must develop along this axis. The axis "d" refers to the direct axis of the rotor flow. Current Iq therefore refers to the torque of the motor and allows calculating the effective current of the motor. By monitoring current Iq or the effective current calculated based on said current Iq, the torque of the motor and its evolution can thus be estimated, detecting an increase in the torque of the motor by means of an increase in said current Iq or said effective current. In the vectorial control method, other values such as voltages V_{d} and Vq are calculated based on the aforementioned currents I_{d} and I_{q}. The control unit could also estimate the torque of the motor 20 based on said voltages V_{d} and Vq since they also allow estimating the evolution of the torque of the motor.

Figure 8 shows by way of example the relationship between the effective current of a BLDC-, BLAC-, or PMSM-type motor and the flow rate driven by the pump for different power supply frequencies of the motor, i.e., for different rotational speeds of the motor.

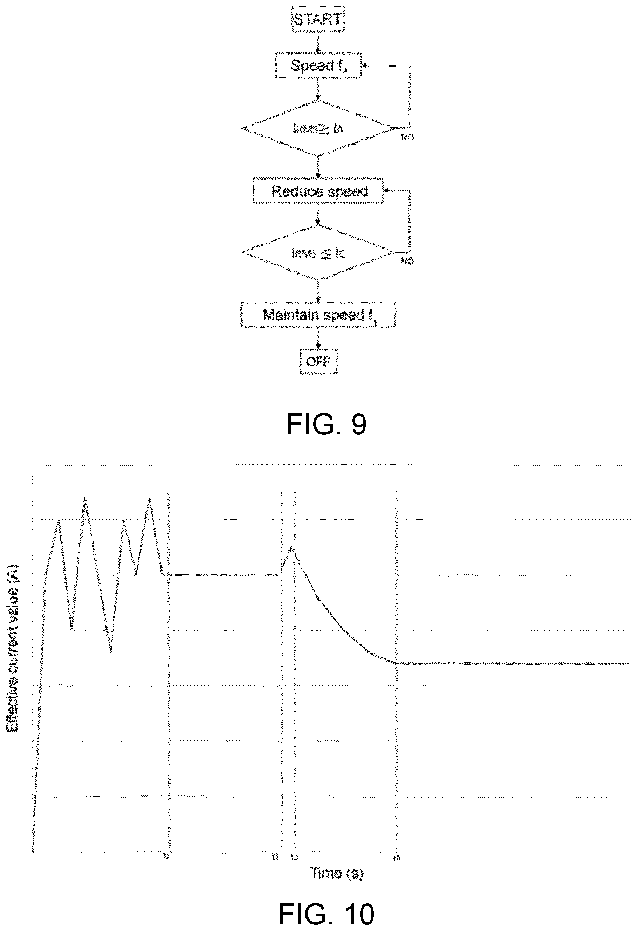

Figure 10 shows by way of example the evolution over time of the effective current value of the motor 20 of the pump 2 when said motor 20 is put into operation with the flap 40 being in the closed position and the control unit being configured to detect the opening of the flap 40 and to actuate the motor 20 of the pump 2 according to the flow chart shown in Figure 9. In this way, when the motor 20 is put into operation, after a first transient interval in which the motor 20 is in the open loop, once the motor is controlled in a closed loop, i.e., starting from instant t₁, the effective current value is kept constant while the flap 40 is closed, i.e., while the flow rate driven by the pump 2 is zero. At the moment when the pressure generated by the fluid driven by the pump 2 overcomes the magnetic force between the flap 40 and the support surface 30, i.e., in instant t2, the flap 40 pivots from the closed position to the open position, and the effective current value starts to rise due to the increase in the flow rate driven by the pump 2. As mentioned above, this increase in the effective current reflects an increase in the torque of the motor. In instant t3, when the effective current value reaches a predetermined opening current value I_{A}, the control unit estimates that the increase in torque indicating that the flap 40 has pivoted to the open position has taken place, and therefore the control unit is configured to determine that the flap 40 has opened. Once the opening of the flap 40 has been determined, the control unit is configured to gradually reduce the setpoint speed to a circulating speed, i.e., to instant t4. The change in setpoint speed is reflected in a progressive decrease of the effective current value until reaching a circulating current value Ic in which it remains constant when said circulating speed is reached.

Alternatively, the control unit controls the motor 20 following the six-step control method. If the motor is controlled according to the six-step control method, by means of the work cycle of the inverter powering the motor 20, also known as PWM duty cycle, an estimate of the torque of the motor 20 and its evolution can be performed. Said estimate can be perfected by combining the work cycle with the current measurement in the terminals of the motor or with the current in the return of a DC bus which is the DC input to the inverter that powers the motor 20.

Preferably, the support surface 30 of the check valve 4 is a surface of the outlet conduit 3. Preferably, the outlet conduit 3 is made in a material which has no ferromagnetic properties. Preferably, the support surface 30 comprises at least one housing 300 in which at least one fixed ferromagnetic part 31 with ferromagnetic properties is arranged, the fixed ferromagnetic part 31 preferably being a ring-shaped part and said fixed ferromagnetic part 31 more preferably being a magnet.

Preferably, the flap 40 comprises an elastomeric portion 400 made of an elastomer and a movable ferromagnetic part 401 with ferromagnetic properties which is embedded in the elastomeric portion 400, said movable ferromagnetic part 401 preferably comprising a ring shape. Preferably, the elastomeric portion 400 is over-injected on the movable ferromagnetic part 401. Alternatively, the elastomeric portion 400 can comprise a housing in which the movable ferromagnetic part 401 is inserted.

More preferably, the support surface 30 comprises an annular-shaped housing 300 in which a ring-shaped fixed ferromagnetic part 31 is arranged, and the flap 40 comprises a ring-shaped movable ferromagnetic part 401 with ferromagnetic properties which is embedded in an elastomeric portion 400, with the fixed ferromagnetic part 31 and the movable ferromagnetic part 401 being arranged together when the flap 40 is arranged in the closed position.

Preferably, the pump 2 is part of a self-cleaning filtering device 5 comprising an inlet conduit 50, a main outlet 51, and a sludge outlet 52 connected to the outlet conduit 3. The self-cleaning filtering device 5 comprises an outlet chamber 53 communicated with the main outlet 51, an inlet chamber 54 at least partially surrounding the outlet chamber 53 and communicated with the inlet conduit 50, and a filtering element 55 separating the inlet chamber 54 from the outlet chamber 53. The filtering element 55 is configured to operate in a filtering mode in which the filtering element 55 is kept immobile and filters the fluid circulating from the inlet chamber 54 to the outlet chamber 53. The filtering element 55 is also configured to operate in a self-cleaning mode in which the filtering element 55 rotates such that the particles adhered to the outer surface of the filtering element 55 come off as a result of the centrifugal force generated. The pump 2 comprises an impeller 21 which is arranged inside the self-cleaning filtering device 5. The outlet of the motor 20 is coupled to the impeller 21 and to the filtering element 55, said impeller 21 being configured to drive the sludge generated in the self-cleaning mode to the sludge outlet 52. The control unit is configured to activate the self-cleaning mode of the self-cleaning filtering device 5.

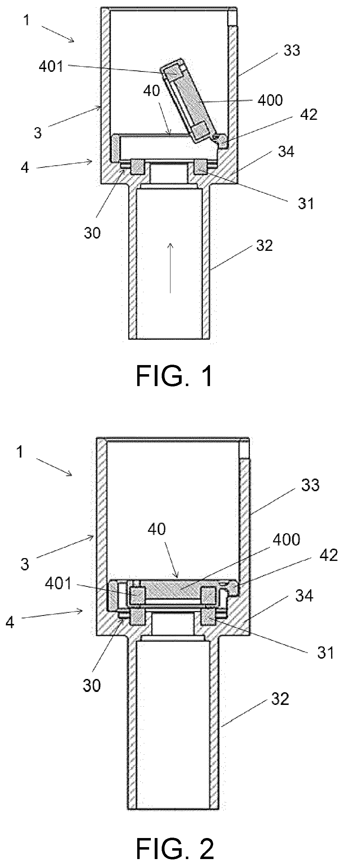

Figures 1 and 2 show a first embodiment of the hydraulic system according to the invention.

The hydraulic system 1 comprises a pump (not shown in the figures) comprising a BLDC-, BLAC-, or PMSM-type motor, an outlet conduit 3 connected to the outlet of said pump, and a check valve 4.

The check valve 4 comprises a support surface 30 and a flap 40 pivotably coupled to said support surface 30. Both the flap 40 and the support surface 30 comprise ferromagnetic properties. In this first embodiment, the flap 40 and the support surface 30 comprise a permanent magnet.

The flap 40 is configured to pivot between an open position, as shown in Figure 1, in which it allows the circulation of a fluid driven by the pump through said outlet conduit 3 in the direction of passage, and a closed position, as shown in Figure 2, in which the flap 40 is supported on the support surface 30 such that it prevents the circulation of said fluid through said outlet conduit 3. The direction of passage is indicated in Figure 1 by means of an arrow.

The hydraulic system also comprises a control unit (not shown in the figures).

Said control unit is configured to estimate the torque of the motor from the current consumption of the motor (either the current measured in the terminals of the motor or the current measured in the return of the DC bus powering the inverter which powers the motor) and/or from the voltage measured in the terminals of the motor, and to determine whether the flap 40 of the check valve 4 is in the open position or in the closed position based on said estimated torque of the motor.

In this first embodiment, the support surface 30 of the check valve 4 is a surface of the outlet conduit 3. The outlet conduit 3 comprises a first segment 32 connected to the outlet of the pump, an intermediate segment 34 after the first segment 32, and a second segment 33 after the intermediate segment 34. The support surface 30 is a surface of the intermediate segment 34.

In this first embodiment, the support surface 30 comprises an annular-shaped housing in which a ring-shaped fixed ferromagnetic part 31 with ferromagnetic properties is arranged, the fixed ferromagnetic part 31 being a magnet.

In this first embodiment, the flap 40 comprises an elastomeric portion 400 made of an elastomer and a movable ferromagnetic part 401 with ferromagnetic properties which is embedded in the elastomeric portion 400. In this first embodiment, the elastomeric portion 400 comprises a housing in which the movable ferromagnetic part 401 is inserted. In other embodiments not shown in the figures, the elastomeric portion 400 can be over-injected on the movable ferromagnetic part 401.

In this first embodiment, the check valve also comprises a fixed part 41. The flap 40 is pivotably coupled to the fixed part 41 by means of an attachment part 42 which acts as a hinge between the fixed part 41 and the flap 40. Preferably, both the fixed part 41 and the attachment part 42 are made of the same material as the flap 40, with the fixed part 41, the attachment part 42, and the flap 40 forming a single part.

In this first embodiment, the fixed part 41 is arranged fitted into the second segment 33 of the outlet conduit 3 and supported on the support surface 30, such that the fixed ferromagnetic part 31 and the movable ferromagnetic part 401 are arranged together when the flap 40 is arranged in the closed position. Since the movable ferromagnetic part 401 is embedded in the elastomeric portion 400, when the flap 40 is arranged in the closed position, it is the elastomer of the elastomeric portion 400 which is supported on the fixed ferromagnetic part 31, thereby ensuring a leak-tight closure.

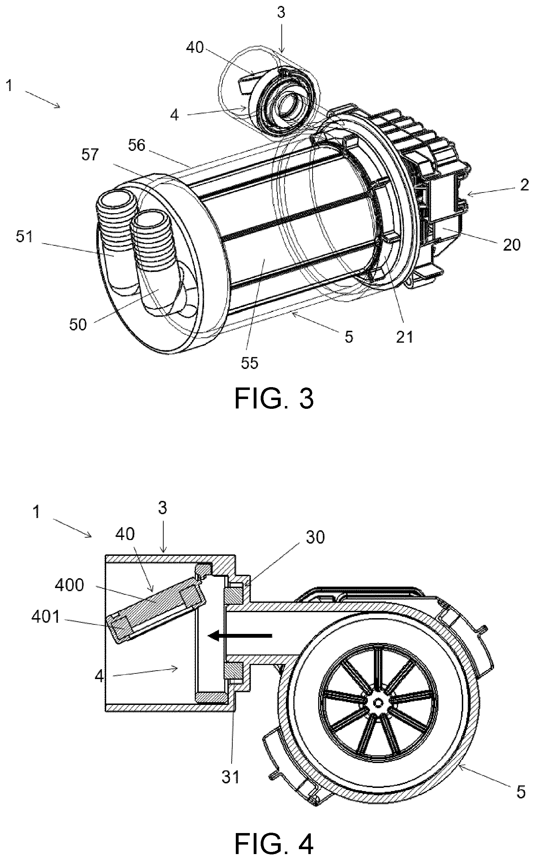

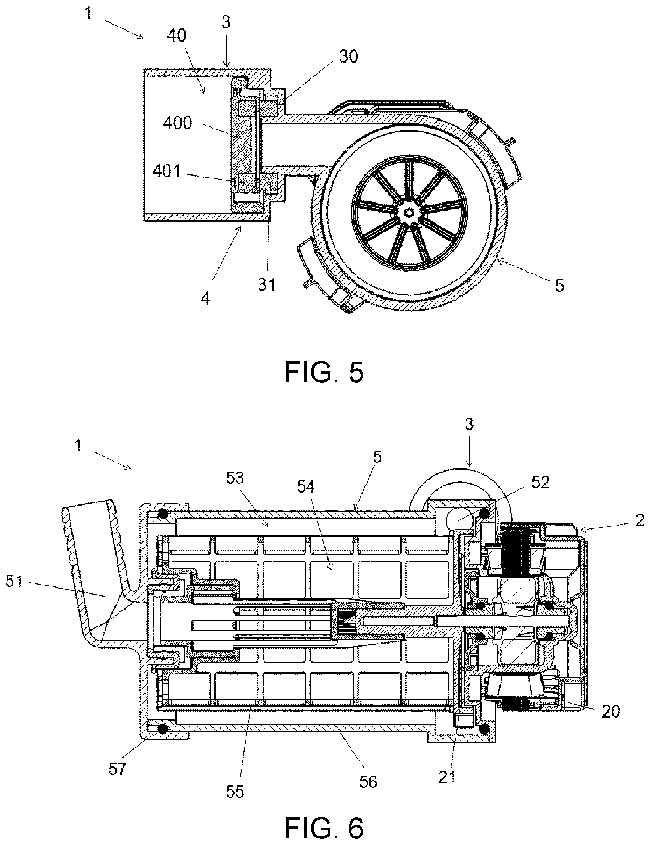

Figures 3 to 6 show a second embodiment of the hydraulic system 1 according to the invention.

In this second embodiment, the hydraulic system 1 comprises a self-cleaning filtering device 5, a pump 2 which is part of the self-cleaning filtering device 5, an outlet conduit 3, and a check valve 4.

In this second embodiment, the check valve 4 and the outlet conduit 3 have the same features as those of the first embodiment, and therefore it is not considered necessary to describe them again.

In this second embodiment, the self-cleaning filtering device 5 comprises a substantially cylindrical casing 56 which is open at both ends. Furthermore, the self-cleaning filtering device 5 comprises a flap 57 arranged at a first end of the casing 56, with the pump 2 being arranged at a second end of the casing 56.

In this second embodiment, the self-cleaning filtering device 5 comprises an inlet conduit 50 and a main outlet 51 which are arranged in the flap 57, and a sludge outlet 52 connected to the outlet conduit 3, with the sludge outlet 52 being arranged in the casing 57 close to the second end.

In this second embodiment, the self-cleaning filtering device 5 comprises inside the casing 57 an outlet chamber 53 communicated with the main outlet 51, and an inlet chamber 54 at least partially surrounding the outlet chamber 53 and communicated with the inlet conduit 50.

In this second embodiment, the self-cleaning filtering device 5 also comprises a filtering element 55 arranged inside the casing 56, with said filtering element 55 separating the inlet chamber 54 from the outlet chamber 53.

The filtering element 55 is configured to operate in a filtering mode in which the filtering element 55 is kept immobile and filters the fluid circulating from the inlet chamber 54 to the outlet chamber 53, and a self-cleaning mode in which the filtering element 55 rotates such that the particles adhered to the outer surface of the filtering element 55 come off as a result of the centrifugal force generated.

In this second embodiment, the pump 2 comprises an impeller 21 which is arranged inside the casing 56 of the self-cleaning filtering device 5 after the filtering element 55. The outlet of the motor 20 of the pump 2 is coupled to the impeller 21 and to the filtering element 55. The impeller 21 is configured to drive the sludge generated in the self-cleaning mode to the sludge outlet 52.

In this second embodiment, when the self-cleaning filtering device 5 is operating in the filtering mode, the motor 20 of the pump 2 remains immobile and the flap 40 remains in the closed position due to the magnetic force of the check valve 4.

In this second embodiment, the control unit is configured to activate the self-cleaning mode of the self-cleaning filtering device 5. Therefore, when the control unit activates the self-cleaning mode of the self-cleaning filtering device 5, the control unit operates the motor 20 at an opening speed f₄, such that both the filtering element 55 and the impeller 21 rotate at said opening speed f₄. Due to the centrifugal force generated, the particles adhered to the outer surface of the filtering element 55 come off, generating sludge which is driven by the impeller 21 to the outlet conduit 3 through the sludge outlet 52. When the sludge driven by the pump 2 generates a pressure on the flap 40 which overcomes the magnetic force between the flap 40 and the support surface 30, the flap 40 transitions to the open position, and therefore the sludge can circulate through the outlet conduit 3. As explained above, the control unit is configured to estimate the torque of the motor 20 from the current consumption of the motor 20 (either the current measured in the terminals of the motor 20 or the current measured in the return of the DC bus which powers the inverter powering the motor 20) and/or the voltage in the terminals of the motor 20, and to determine whether the flap 40 of the check valve 4 is in the open position or in the closed position based on said estimated torque of the motor 20.

In this second embodiment, when the flap 40 opens, the control unit is configured to operate the motor 20 at a circulating speed f₁ less than the opening speed f₄.

In this second embodiment, in the case where an increase in the estimated torque of the motor 20 is not detected after operating at the opening speed f₄ for a predetermined time, the control unit is configured to operate the motor 20 at a maximum speed greater than the opening speed f₄ for a predetermined time, and to operate the motor 20 at the circulating speed f₁ if it detects that the flap 40 of the check valve 4 has opened with the motor 20 operating at the maximum speed.

In this second embodiment, the control unit is configured to activate an alarm in the case of detecting a failed opening of the flap 40 of the check valve 4.

A second aspect of the invention relates to a control method for controlling a hydraulic system of a household appliance, particularly a washing machine or a dish washer.

The method of the invention is configured to be applied in a hydraulic system such as the one described above and all the considerations made for the hydraulic system are applicable to the control method of the invention.

The control method controls the speed of the motor 20 in a closed loop. Furthermore, the control method determines whether the flap 40 of the check valve 4 is in the open position or in the closed position based on estimating the torque of the motor 20 from the current consumption of the motor 20 and/or the voltage in the terminals of the motor 20.

Preferably, the control method comprises an opening step in which the motor 20 is operated at an opening speed f₄ to open the flap 40 of the check valve 4, driving the fluid such that it generates a pressure on the flap 40 which overcomes the magnetic force between said flap 40 and the support surface 30, and, if it is detected that the flap 40 has opened, a circulating step in which the motor 20 is operated at a circulating speed f₁ less than the opening speed f₄. The consumption of the pump 2 can thus be optimized since once it is ensured that the flap 40 is open, and therefore that the magnetic force between the flap 40 and the support surface 30 has been overcome, the setpoint speed of the motor 20, and therefore the power consumption of the motor 20, can be reduced, maintaining the desired flow rate in the pump 2. In the opening step, the control method determines that the flap 40 has opened if an increase in the estimated torque of the motor 20 is detected. As explained above, in the context of the invention, the estimated torque refers to a direct or indirect estimate, i.e., the control method can monitor a parameter which reflects the torque of the motor so as to enable determining the position in which the flap 40 is arranged without having to directly calculate the torque of the motor. Preferably, the control method estimates the torque of the motor by means of the effective current of the motor.

Preferably, in the opening step, if it is determined that the flap 40 has not opened after a predetermined time interval, the motor 20 is operated at a maximum speed greater than the opening speed f₄ for a predetermined time, transitioning to the circulating step if an increase in the estimated torque of the motor 20 is detected.

Preferably, an alarm is activated in the case of a failed opening of the flap 40 of the check valve 4 in the opening step.

Preferably, the control of the speed of the motor 20 in a closed loop is performed according to the FOC vectorial method, for example according to the block diagram shown in Figure 7. As mentioned above, the vectorial control method is based on the transformation of the three-phase stationary system consisting of currents measured in the terminals of the motor 20 into a two-phase rotary system in which currents I_{d} and I_{q} are defined. In this case, the torque of the motor 20 can be estimated indirectly by means of monitoring the value Iq calculated in said vectorial control method or by monitoring the effective current value of the motor 20 calculated by means of said current I_{q}. The torque of the motor 20 can also be estimated indirectly by means of the values V_{q} and V_{d} calculated in said FOC vectorial method.

Alternatively, the control unit controls the motor 20 following the six-step control method. If the motor is controlled according to the six-step control method, by means of the work cycle of the inverter powering the motor 20 calculated from the voltage in the terminals of the motor, also known as PWM duty cycle, an estimate of the torque of the motor 20 and its evolution can be performed. Said estimate can be perfected by combining the work cycle with the current measurement in the terminals of the motor or with the current in the return of a DC bus which is the DC input to the inverter that powers the motor 20.

Preferably, an alarm is activated in the case of a failed opening of the flap 40 of the check valve 4 in the opening step.

Figure 9 shows a block diagram which shows a preferred embodiment of the control method according to the invention. In said preferred embodiment of the control method, the effective current value of the motor 20 is monitored. When the motor 20 is put into operation, the opening speed f₄ is established as the setpoint speed, and as long as the effective current does not exceed a preestablished opening current value I_{A} the motor is kept rotating at said opening speed f₄ as the setpoint speed. Once the opening current value Iₐ, is exceeded, the setpoint speed of the motor 20 gradually decreases as long as the effective current value of the motor 20 is greater than a preestablished circulating current value I_{B}. Once the current is below said circulating current value I_{B}, the control method keeps the motor 20 rotating at the setpoint circulating speed f₁.

## Claims

1. Hydraulic system for a household appliance, said hydraulic system (1) comprising
- a pump (2),
- an outlet conduit (3) connected to the outlet of said pump (2), and
- a check valve (4) comprising a support surface (30) and a flap (40) pivotably coupled to said support surface (30), the flap (40) and the support surface (30) comprising ferromagnetic properties, at least said flap (40) or said support surface (30) comprising a permanent magnet, said flap (40) being configured to pivot between
∘ an open position in which it allows the circulation of a fluid driven by the pump (2) through said outlet conduit (3), and
∘ a closed position in which the flap (40) is supported on the support surface (30) such that it prevents the circulation of said fluid through said outlet conduit (3),
the hydraulic system comprising a control unit, **characterized in that** the pump (2) comprises a BLDC-, BLAC-, or PMSM-type motor (20),
the control unit being configured to control the speed of the motor (20) in a closed loop, and to determine whether the flap (40) of the check valve (4) is in the open position or in the closed position based on the torque of the motor (20) estimated from the current consumption of the motor (20) and/or the voltage in the terminals of the motor (20),
the control unit being also configured to operate the motor (20) at an opening speed (f₄) to open the flap (40) of the check valve (4), driving the fluid such that it generates a pressure on the flap (40) which overcomes the magnetic force between said flap (40) and the support surface (30), and to operate the motor (20) at a circulating speed (f₁) less than the opening speed (f₄) if it detects that the flap (40) of the check valve (4) has opened, the control unit being further configured to determine that the flap (40) has opened if it detects an increase in the estimated torque of the motor (20).

2. Hydraulic system according to claim 1, wherein, in the case where an increase in the estimated torque of the motor (20) is not detected after operating at the opening speed (f₄) for a predetermined time, the control unit is configured to operate the motor (20) at a maximum speed greater than the opening speed (f₄) for a predetermined time, and to operate the motor (20) at the circulating speed (f₁) if it detects that the flap (40) of the check valve (4) has opened with the motor (20) operating at the maximum speed.

3. Hydraulic system according to claim 1 or 2, wherein the control unit is configured to control the motor (20) according to the FOC vectorial control method, the control unit being configured to estimate the torque of the motor (20) based on the value Iq or the values Vq and Vd calculated in said vectorial control method from the currents in the terminals of the motor.

4. Hydraulic system according to claim 1 or 2, wherein the control unit is configured to control the motor (20) according to the six-step control method, the control unit being configured to estimate the torque of the motor (20) based on the work cycle calculated in said control method from the voltage in the terminals of the motor, and/or from the currents in the terminals of the motor, or from the current in the return of a DC bus which is the input to an inverter powering the motor (20).

5. Hydraulic system according to any of claims 1 to 4, wherein the control unit is configured to activate an alarm in the case of detecting a failed opening of the flap (40) of the check valve (4).

6. Hydraulic system according to any of claims 1 to 5, wherein the support surface (30) of the check valve (4) is a surface of the outlet conduit (3), said support surface (30) comprising at least one housing (300) in which at least one fixed ferromagnetic part (31) with ferromagnetic properties is arranged, the fixed ferromagnetic part (31) preferably being a ring-shaped part.

7. Hydraulic system according to any of claims 1 to 6, wherein the flap (40) comprises an elastomeric portion (400) made of an elastomer and a movable ferromagnetic part (401) with ferromagnetic properties which is embedded in the elastomeric portion (400), said movable ferromagnetic part (401) preferably comprising a ring shape, and the elastomeric portion (400) preferably being over-injected on the movable ferromagnetic part (401) or the movable ferromagnetic part (401) preferably being inserted in a housing of the elastomeric portion (400).

8. Hydraulic system according to any of claims 1 to 7, wherein the pump (2) is part of a self-cleaning filtering device (5) comprising an inlet conduit (50), a main outlet (51), and a sludge outlet (52) connected to the outlet conduit (3), the self-cleaning filtering device (5) comprising
∘ an outlet chamber (53) communicated with the main outlet (51),
∘ an inlet chamber (54) at least partially surrounding the outlet chamber (53) and communicated with the inlet conduit (50), and
∘ a filtering element (55) separating the inlet chamber (54) from the outlet chamber (53), the filtering element (55) being configured to operate in
▪ a filtering mode in which the filtering element (55) is kept immobile and filters the fluid circulating from the inlet chamber (54) to the outlet chamber (53), and
▪ a self-cleaning mode in which the filtering element (55) rotates such that the particles adhered to the outer surface of the filtering element (55) come off as a result of the centrifugal force generated,
- the pump (2) comprising an impeller (21) which is arranged inside the self-cleaning filtering device (5), the outlet of the motor (20) being coupled to the impeller (21) and to the filtering element (55), said impeller (21) being configured to drive the sludge generated in the self-cleaning mode to the sludge outlet (52), and
- the control unit being configured to activate the self-cleaning mode of the self-cleaning filtering device (5).

9. Control method for controlling a hydraulic system of a household appliance, the hydraulic system comprising
- a pump (2),
- an outlet conduit (3) connected to the outlet of said pump (2), and
- a check valve (4) comprising a support surface (30) and a flap (40) pivotably coupled to said support surface (30), the flap (40) and the support surface (30) comprising ferromagnetic properties, at least said flap (40) or said support surface (30) comprising a permanent magnet, said flap (40) being configured to pivot between
∘ an open position in which it allows the circulation of a fluid driven by the pump (2) through said outlet conduit (3), and
∘ a closed position in which the flap (40) is supported on the support surface (30) such that it prevents the circulation of said fluid through said outlet conduit (3),
**characterized in that** the pump (2) comprises a BLDC-, BLAC-, or PMSM-type motor (20), the speed of the motor (20) being controlled in a closed loop, and whether the flap (40) of the check valve (4) is in the open position or in the closed position being determined based on estimating the torque of the motor (20) from the current consumption of the motor (20) and/or the voltage in the terminals of the motor (20),
the control method comprising an opening step in which the motor (20) is operated at an opening speed (f₄) to open the flap (40) of the check valve (4), driving the fluid such that it generates a pressure on the flap (40) which overcomes the magnetic force between said flap (40) and the support surface (30), and, if it is detected that the flap (40) has opened, a circulating step in which the motor (20) is operated at a circulating speed (f₁) less than the opening speed (f₄), with the flap (40) being determined as having opened in the opening step if an increase in the estimated torque of the motor (20) is detected.

10. Control method according to claim 9, wherein, in the opening step, if it is determined that the flap (40) has not opened after a predetermined time interval, the motor (20) is operated at a maximum speed greater than the opening speed (f₄) for a predetermined time, transitioning to the circulating step if an increase in the estimated torque of the motor (20) is detected.

11. Control method according to claim 9 or 10, wherein an alarm is activated in the case of a failed opening of the flap (40) of the check valve (4) in the opening step.

12. Control method according to any of claims 9 to 11, wherein controlling the speed of the motor (20) in a closed loop is performed according to the FOC vectorial method, the torque of the motor (20) being estimated based on the value Iq or the values Vq and Vd calculated in said FOC vectorial method from the currents in the terminals of the motor (20).

13. Control method according to any of claims 9 to 11, wherein controlling the speed of the motor (20) in a closed loop is performed according to the six-step control method, the torque of the motor (20) being estimated based on the voltage in the terminals of the motor and the currents in the terminals of the stator or the current in the return of a DC bus which is the input to an inverter powering the motor (20).

## Patentansprüche

1. Hydrauliksystem für ein Haushaltsgerät, wobei das Hydrauliksystem (1) Folgendes umfasst:
- eine Pumpe (2),
- eine Auslassleitung (3), die mit dem Auslass der Pumpe (2) verbunden ist, und
- ein Rückschlagventil (4), das eine Trägeroberfläche (30) und eine schwenkbar mit der Trägeroberfläche (30) gekoppelte Klappe (40) umfasst, wobei die Klappe (40) und die Trägeroberfläche (30) ferromagnetische Eigenschaften umfassen, wobei mindestens die Klappe (40) oder die Trägeroberfläche (30) einen Permanentmagneten umfasst, wobei die Klappe (40) dazu konfiguriert ist, zwischen Folgendem zu schwenken:
○ einer offenen Position, in der sie die Zirkulation eines von der Pumpe (2) geförderten Fluids durch die Auslassleitung (3) ermöglicht, und
○ einer geschlossenen Position, in der die Klappe (40) auf der Trägeroberfläche (30) getragen wird, sodass sie die Zirkulation des Fluids durch die Auslassleitung (3) verhindert,
wobei das Hydrauliksystem eine Steuereinheit umfasst, **dadurch gekennzeichnet, dass** die Pumpe (2) einen Motor (20) vom Typ BLDC, BLAC oder PMSM umfasst,
wobei die Steuereinheit dazu konfiguriert ist, die Drehzahl des Motors (20) in einem geschlossenen Kreis zu steuern und basierend auf dem Drehmoment des Motors (20), das aus der Stromaufnahme des Motors (20) und/oder der Spannung an den Anschlüssen des Motors (20) geschätzt wird, zu bestimmen, ob sich die Klappe (40) des Rückschlagventils (4) in der offenen Position oder in der geschlossenen Position befindet,
wobei die Steuereinheit ferner dazu konfiguriert ist, den Motor (20) mit einer Öffnungsdrehzahl (f₄) zu betreiben, um die Klappe (40) des Rückschlagventils (4) zu öffnen, wobei das Fluid so befördert wird, dass es einen Druck auf die Klappe (40) generiert, der die Magnetkraft zwischen der Klappe (40) und der Trägeroberfläche (30) überwindet, und den Motor (20) mit einer Zirkulationsdrehzahl (f₁) zu betreiben, die geringer ist als die Öffnungsdrehzahl (f₄), falls erkannt wird, dass sich die Klappe (40) des Rückschlagventils (4) geöffnet hat, wobei die Steuereinheit ferner dazu konfiguriert ist, zu bestimmen, dass sich die Klappe (40) geöffnet hat, falls eine Zunahme des geschätzten Drehmoments des Motors (20) erkannt wird.

2. Hydrauliksystem nach Anspruch 1, wobei, falls nach dem Betrieb mit der Öffnungsdrehzahl (f₄) für eine vorbestimmte Zeit keine Zunahme des geschätzten Drehmoments des Motors (20) erkannt wird, die Steuereinheit dazu konfiguriert ist, den Motor (20) für eine vorbestimmte Zeit mit einer maximalen Drehzahl zu betreiben, die größer ist als die Öffnungsdrehzahl (f₄), und den Motor (20) mit der Zirkulationsdrehzahl (f₁) zu betreiben, falls erkannt wird, dass sich die Klappe (40) des Rückschlagventils (4) geöffnet hat, während der Motor (20) mit der maximalen Drehzahl betrieben wird.

3. Hydrauliksystem nach Anspruch 1 oder 2, wobei die Steuereinheit dazu konfiguriert ist, den Motor (20) gemäß dem FOC-Vektorsteuerverfahren zu steuern, wobei die Steuereinheit dazu konfiguriert ist, das Drehmoment des Motors (20) basierend auf dem Wert I_{q} oder den Werten V_{q} und V_{d} zu schätzen, die bei dem Vektorsteuerverfahren aus den Strömen an den Anschlüssen des Motors berechnet werden.

4. Hydrauliksystem nach Anspruch 1 oder 2, wobei die Steuereinheit dazu konfiguriert ist, den Motor (20) gemäß dem Sechs-Schritte-Steuerverfahren zu steuern, wobei die Steuereinheit dazu konfiguriert ist, das Drehmoment des Motors (20) basierend auf dem im Steuerverfahren berechneten Arbeitszyklus aus der Spannung an den Anschlüssen des Motors und/oder aus den Strömen an den Anschlüssen des Motors oder aus dem Strom im Rücklauf eines Gleichstrombusses zu schätzen, der den Eingang eines den Motor (20) versorgenden Wechselrichters ist.

5. Hydrauliksystem nach einem der Ansprüche 1 bis 4, wobei die Steuereinheit dazu konfiguriert ist, dass sie im Falle des Erkennens eines fehlgeschlagenen Öffnens der Klappe (40) des Rückschlagventils (4) einen Alarm aktiviert.

6. Hydrauliksystem nach einem der Ansprüche 1 bis 5, wobei die Trägeroberfläche (30) des Rückschlagventils (4) eine Oberfläche der Auslassleitung (3) ist, wobei die Trägeroberfläche (30) mindestens ein Gehäuse (300) umfasst, in dem mindestens ein feststehendes ferromagnetisches Teil (31) mit ferromagnetischen Eigenschaften angeordnet ist, wobei das feststehende ferromagnetische Teil (31) vorzugsweise ein ringförmiges Teil ist.

7. Hydrauliksystem nach einem der Ansprüche 1 bis 6, wobei die Klappe (40) einen Elastomerabschnitt (400) aus einem Elastomer und ein bewegliches ferromagnetisches Teil (401) mit ferromagnetischen Eigenschaften umfasst, das in den Elastomerabschnitt (400) eingebettet ist, wobei das bewegliche ferromagnetische Teil (401) vorzugsweise eine Ringform umfasst und der Elastomerabschnitt (400) vorzugsweise auf das bewegliche ferromagnetische Teil (401) aufgespritzt ist oder das bewegliche ferromagnetische Teil (401) vorzugsweise in ein Gehäuse des Elastomerabschnitts (400) eingesetzt ist.

8. Hydrauliksystem nach einem der Ansprüche 1 bis 7, wobei die Pumpe (2) Teil einer selbstreinigenden Filtervorrichtung (5) ist, die eine Einlassleitung (50), einen Hauptauslass (51) und einen mit der Auslassleitung (3) verbundenen Schlammauslass (52) umfasst, wobei die selbstreinigende Filtervorrichtung (5) Folgendes umfasst:
∘ eine Auslasskammer (53), die mit dem Hauptauslass (51) in Verbindung steht,
∘ eine Einlasskammer (54), die die Auslasskammer (53) mindestens teilweise umgibt und mit der Einlassleitung (50) in Verbindung steht, und
∘ ein Filterelement (55), das die Einlasskammer (54) von der Auslasskammer (53) trennt, wobei das Filterelement (55) dazu konfiguriert ist, folgendermaßen betrieben zu werden:
▪ in einem Filtermodus, in dem das Filterelement (55) unbeweglich gehalten wird und das von der Einlasskammer (54) zur Auslasskammer (53) zirkulierende Fluid filtert, und
∘ in einem Selbstreinigungsmodus, in dem sich das Filterelement (55) so dreht, dass sich die an der Außenoberfläche des Filterelements (55) anhaftenden Partikel infolge der generierten Zentrifugalkraft ablösen,
- wobei die Pumpe (2) ein Laufrad (21) umfasst, das innerhalb der selbstreinigenden Filtervorrichtung (5) angeordnet ist, wobei der Abgang des Motors (20) mit dem Laufrad (21) und dem Filterelement (55) gekoppelt ist, wobei das Laufrad (21) dazu konfiguriert ist, den im Selbstreinigungsmodus generierten Schlamm zum Schlammauslass (52) zu befördern, und
- wobei die Steuereinheit dazu konfiguriert ist, den Selbstreinigungsmodus der selbstreinigenden Filtervorrichtung (5) zu aktivieren.

9. Steuerverfahren zum Steuern eines Hydrauliksystems eines Haushaltsgeräts, wobei das Hydrauliksystem Folgendes umfasst:
- eine Pumpe (2),
- eine Auslassleitung (3), die mit dem Auslass der Pumpe (2) verbunden ist, und
- ein Rückschlagventil (4), das eine Trägeroberfläche (30) und eine schwenkbar mit der Trägeroberfläche (30) gekoppelte Klappe (40) umfasst, wobei die Klappe (40) und die Trägeroberfläche (30) ferromagnetische Eigenschaften umfassen, wobei mindestens die Klappe (40) oder die Trägeroberfläche (30) einen Permanentmagneten umfasst, wobei die Klappe (40) dazu konfiguriert ist, zwischen Folgendem zu schwenken:
∘ einer offenen Position, in der sie die Zirkulation eines von der Pumpe (2) geförderten Fluids durch die Auslassleitung (3) ermöglicht, und
∘ einer geschlossenen Position, in der die Klappe (40) auf der Trägeroberfläche (30) getragen wird, sodass sie die Zirkulation des Fluids durch die Auslassleitung (3) verhindert,
**dadurch gekennzeichnet, dass** die Pumpe (2) einen Motor (20) vom Typ BLDC, BLAC oder PMSM umfasst, wobei die Drehzahl des Motors (20) in einem geschlossenen Kreis gesteuert wird und basierend auf einer Schätzung des Drehmoments des Motors (20) aus der Stromaufnahme des Motors (20) und/oder der Spannung an den Anschlüssen des Motors (20) bestimmt wird, ob sich die Klappe (40) des Rückschlagventils (4) in der offenen Position oder in der geschlossenen Position befindet, wobei das Steuerverfahren einen Öffnungsschritt umfasst, bei dem der Motor (20) mit einer Öffnungsdrehzahl (f₄) betrieben wird, um die Klappe (40) des Rückschlagventils (4) zu öffnen, wobei das Fluid so befördert wird, dass es einen Druck auf die Klappe (40) generiert, der die Magnetkraft zwischen der Klappe (40) und der Trägeroberfläche (30) überwindet, und, falls erkannt wird, dass sich die Klappe (40) geöffnet hat, einen Zirkulationsschritt, bei dem der Motor (20) mit einer Zirkulationsdrehzahl (f₁) betrieben wird, die geringer ist als die Öffnungsdrehzahl (f₄), wobei erkannt wird, dass sich die Klappe (40) im Öffnungsschritt geöffnet hat, wenn eine Zunahme des geschätzten Drehmoments des Motors (20) erkannt wird.

10. Steuerverfahren nach Anspruch 9, wobei im Öffnungsschritt, falls bestimmt wird, dass sich die Klappe (40) nach einem vorbestimmten Zeitintervall nicht geöffnet hat, der Motor (20) für eine vorbestimmte Zeit mit einer maximalen Drehzahl betrieben wird, die größer ist als die Öffnungsdrehzahl (f₄), wobei zum Zirkulationsschritt übergegangen wird, falls eine Zunahme des geschätzten Drehmoments des Motors (20) erkannt wird.

11. Steuerverfahren nach Anspruch 9 oder 10, wobei im Falle eines fehlgeschlagenen Öffnens der Klappe (40) des Rückschlagventils (4) im Öffnungsschritt ein Alarm aktiviert wird.

12. Steuerverfahren nach einem der Ansprüche 9 bis 11, wobei das Steuern der Drehzahl des Motors (20) in einem geschlossenen Kreis nach dem FOC-Vektorverfahren durchgeführt wird, wobei das Drehmoment des Motors (20) basierend auf dem Wert Iq oder den Werten Vq und Vd geschätzt wird, die bei dem FOC-Vektorverfahren aus den Strömen an den Anschlüssen des Motors (20) berechnet werden.

13. Steuerverfahren nach einem der Ansprüche 9 bis 11, wobei das Steuern der Drehzahl des Motors (20) in einem geschlossenen Kreis nach dem Sechs-Schritte-Steuerverfahren durchgeführt wird, wobei das Drehmoment des Motors (20) basierend auf der Spannung an den Anschlüssen des Motors und den Strömen an den Anschlüssen des Stators oder dem Strom im Rücklauf eines Gleichstrombusses geschätzt wird, der der Eingang eines den Motor (20) versorgenden Wechselrichters ist.

## Revendications

1. Système hydraulique pour un appareil électroménager, ledit système hydraulique (1) comprenant
- une pompe (2),
- un conduit de sortie (3) relié à la sortie de ladite pompe (2), et
- un clapet antiretour (4) comprenant une surface d'appui (30) et un volet (40) couplé de manière pivotante à ladite surface d'appui (30), le volet (40) et la surface d'appui (30) présentant des propriétés ferromagnétiques, au moins ledit volet (40) ou ladite surface d'appui (30) comprenant un aimant permanent, ledit volet (40) étant configuré pour pivoter entre
∘ une position ouverte dans laquelle il permet la circulation d'un fluide entraîné par la pompe (2) à travers ledit conduit de sortie (3), et
∘ une position fermée dans laquelle le volet (40) repose sur la surface d'appui (30) de façon à empêcher la circulation dudit fluide à travers ledit conduit de sortie (3),
le système hydraulique comprenant une unité de commande, **caractérisé en ce que** la pompe (2) comprend un moteur (20) de type BLDC, BLAC ou PMSM,
l'unité de commande étant configurée pour commander la vitesse du moteur (20) en boucle fermée et pour déterminer si le volet (40) du clapet antiretour (4) se trouve dans la position ouverte ou dans la position fermée sur la base du couple du moteur (20) estimé à partir de la consommation de courant du moteur (20) et/ou de la tension aux bornes du moteur (20),
l'unité de commande étant également configurée pour faire fonctionner le moteur (20) à une vitesse d'ouverture (f4) afin d'ouvrir le volet (40) du clapet antiretour (4), en entraînant le fluide de telle sorte qu'il génère sur le volet (40) une pression qui surmonte la force magnétique entre ledit volet (40) et la surface d'appui (30), et pour faire fonctionner le moteur (20) à une vitesse de circulation (f1) inférieure à la vitesse d'ouverture (f4) si elle détecte que le volet (40) du clapet antiretour (4) s'est ouvert, l'unité de commande étant en outre configurée pour déterminer que le volet (40) s'est ouvert si elle détecte une augmentation du couple estimé du moteur (20).

2. Système hydraulique selon la revendication 1, dans lequel, dans le cas où aucune augmentation du couple estimé du moteur (20) n'est détectée après un fonctionnement à la vitesse d'ouverture (f₄) pendant une durée prédéterminée, l'unité de commande est configurée pour faire fonctionner le moteur (20) à une vitesse maximale supérieure à la vitesse d'ouverture (f₄) pendant une durée prédéterminée, et pour faire fonctionner le moteur (20) à la vitesse de circulation (f₁) si elle détecte que le volet (40) du clapet antiretour (4) s'est ouvert alors que le moteur (20) fonctionne à la vitesse maximale.

3. Système hydraulique selon la revendication 1 ou 2, dans lequel l'unité de commande est configurée pour commander le moteur (20) selon le procédé de commande vectorielle FOC, l'unité de commande étant configurée pour estimer le couple du moteur (20) sur la base de la valeur Iq ou des valeurs Vq et Vd calculées dans ledit procédé de commande vectorielle à partir des courants aux bornes du moteur.

4. Système hydraulique selon la revendication 1 ou 2, dans lequel l'unité de commande est configurée pour commander le moteur (20) selon le procédé de commande à six étapes, l'unité de commande étant configurée pour estimer le couple du moteur (20) sur la base du rapport cyclique calculé dans ledit procédé de commande à partir de la tension aux bornes du moteur et/ou des courants aux bornes du moteur, ou du courant dans le retour d'un bus CC qui constitue l'entrée d'un onduleur alimentant le moteur (20).

5. Système hydraulique selon l'une quelconque des revendications 1 à 4, dans lequel l'unité de commande est configurée pour activer une alarme en cas de détection d'un échec d'ouverture du volet (40) du clapet antiretour (4).

6. Système hydraulique selon l'une quelconque des revendications 1 à 5, dans lequel la surface d'appui (30) du clapet antiretour (4) est une surface du conduit de sortie (3), ladite surface d'appui (30) comprenant au moins un logement (300) dans lequel est agencée au moins une pièce ferromagnétique fixe (31) présentant des propriétés ferromagnétiques, la pièce ferromagnétique fixe (31) étant de préférence une pièce annulaire.

7. Système hydraulique selon l'une quelconque des revendications 1 à 6, dans lequel le volet (40) comprend une partie élastomère (400) constituée d'un élastomère et une pièce ferromagnétique mobile (401) présentant des propriétés ferromagnétiques qui est noyée dans la partie élastomère (400), ladite pièce ferromagnétique mobile (401) étant de préférence de forme annulaire, et la partie élastomère (400) étant de préférence surinjectée sur la pièce ferromagnétique mobile (401), ou la pièce ferromagnétique mobile (401) étant de préférence insérée dans un logement de la partie élastomère (400).

8. Système hydraulique selon l'une quelconque des revendications 1 à 7, dans lequel la pompe (2) fait partie d'un dispositif filtrant autonettoyant (5) comprenant un conduit d'entrée (50), une sortie principale (51) et une sortie de boues (52) reliée au conduit de sortie (3), le dispositif filtrant autonettoyant (5) comprenant
∘ une chambre de sortie (53) communiquant avec la sortie principale (51),
∘ une chambre d'entrée (54) entourant au moins partiellement la chambre de sortie (53) et communiquant avec le conduit d'entrée (50), et
∘ un élément filtrant (55) séparant la chambre d'entrée (54) de la chambre de sortie (53), l'élément filtrant (55) étant configuré pour fonctionner selon
▪ un mode de filtration dans lequel l'élément filtrant (55) est maintenu immobile et filtre le fluide circulant de la chambre d'entrée (54) vers la chambre de sortie (53), et
▪ un mode autonettoyant dans lequel l'élément filtrant (55) tourne de telle sorte que les particules adhérant à la surface extérieure de l'élément filtrant (55) se détachent sous l'effet de la force centrifuge générée,
- la pompe (2) comprenant une roue (21) qui est agencée à l'intérieur du dispositif filtrant autonettoyant (5), la sortie du moteur (20) étant couplée à la roue (21) et à l'élément filtrant (55), ladite roue (21) étant configurée pour entraîner les boues générées dans le mode autonettoyant vers la sortie de boues (52), et
- l'unité de commande étant configurée pour activer le mode autonettoyant du dispositif filtrant autonettoyant (5).

9. Procédé de commande destiné à commander un système hydraulique d'un appareil électroménager, le système hydraulique comprenant
- une pompe (2),
- un conduit de sortie (3) relié à la sortie de ladite pompe (2), et
- un clapet antiretour (4) comprenant une surface d'appui (30) et un volet (40) couplé de manière pivotante à ladite surface d'appui (30), le volet (40) et la surface d'appui (30) présentant des propriétés ferromagnétiques, au moins ledit volet (40) ou ladite surface d'appui (30) comprenant un aimant permanent, ledit volet (40) étant configuré pour pivoter entre
∘ une position ouverte dans laquelle il permet la circulation d'un fluide entraîné par la pompe (2) à travers ledit conduit de sortie (3), et
∘ une position fermée dans laquelle le volet (40) repose sur la surface d'appui (30) de façon à empêcher la circulation dudit fluide à travers ledit conduit de sortie (3),
**caractérisé en ce que** la pompe (2) comprend un moteur (20) de type BLDC, BLAC ou PMSM, la vitesse du moteur (20) étant commandée en boucle fermée, et la détermination du fait que le volet (40) du clapet antiretour (4) se trouve dans la position ouverte ou dans la position fermée étant effectuée sur la base d'une estimation du couple du moteur (20) à partir de la consommation de courant du moteur (20) et/ou de la tension aux bornes du moteur (20), le procédé de commande comprenant une étape d'ouverture dans laquelle le moteur (20) fonctionne à une vitesse d'ouverture (f4) afin d'ouvrir le volet (40) du clapet antiretour (4), en entraînant le fluide de telle sorte qu'il génère sur le volet (40) une pression qui surmonte la force magnétique entre ledit volet (40) et la surface d'appui (30), et, s'il est détecté que le volet (40) s'est ouvert, une étape de circulation dans laquelle le moteur (20) fonctionne à une vitesse de circulation (f1) inférieure à la vitesse d'ouverture (f4), le volet (40) étant considéré comme s'étant ouvert lors de l'étape d'ouverture si une augmentation du couple estimé du moteur (20) est détectée.

10. Procédé de commande selon la revendication 9, dans lequel, lors de l'étape d'ouverture, s'il est déterminé que le volet (40) ne s'est pas ouvert après un intervalle de temps prédéterminé, le moteur (20) fonctionne à une vitesse maximale supérieure à la vitesse d'ouverture (f4) pendant une durée prédéterminée, le passage à l'étape de circulation étant effectué si une augmentation du couple estimé du moteur (20) est détectée.

11. Procédé de commande selon la revendication 9 ou 10, dans lequel une alarme est activée en cas d'échec de l'ouverture du volet (40) du clapet antiretour (4) lors de l'étape d'ouverture.

12. Procédé de commande selon l'une quelconque des revendications 9 à 11, dans lequel la commande de la vitesse du moteur (20) en boucle fermée est effectuée selon le procédé de commande vectorielle FOC, le couple du moteur (20) étant estimé sur la base de la valeur Iq ou des valeurs Vq et Vd calculées dans ledit procédé de commande vectorielle FOC à partir des courants aux bornes du moteur (20).

13. Procédé de commande selon l'une quelconque des revendications 9 à 11, dans lequel la commande de la vitesse du moteur (20) en boucle fermée est effectuée selon le procédé de commande à six étapes, le couple du moteur (20) étant estimé sur la base de la tension aux bornes du moteur et des courants aux bornes du stator, ou du courant dans le retour d'un bus CC qui constitue l'entrée d'un onduleur alimentant le moteur (20).
